# EUROPEAN PATENT SPECIFICATION

(11) **EP 0 801 601 B1**
(45) Date of publication and mention of the grant of the patent: **11.08.1999**
(21) Application number: 96900084.3
(22) Date of filing: 05.01.1996
(51) Int. Cl.: B25J 5/02, B25J 9/02, B23K 37/02

(54) **A PORTAL STRUCTURE HAVING A ROBOT GANTRY**
PORTALKONSTRUKTION FÜR ROBOTER
STRUCTURE DE PORTIQUE A SUPPORT POUR ROBOT

(30) Priority: 06.01.1995 DK 1795; 06.01.1995 DK 1895
(43) Date of publication of application: 22.10.1997
(73) Proprietor: ODENSE STAALSKIBSVAERFT A/S, 5100 Odense C (DK)
(72) Inventor: SKJOLSTRUP, Carl Erik, DK-5000 Odense C (DK); LARSEN, Hans Christian, DK-5230 Odense M (DK)
(74) Representative: Heiden, Finn
(86) International application number: DK9600003
(87) International publication number: WO9620818

(56) References cited:
- DE-A- 3 502 631
- GB-A- 2 219 983
- US-A- 4 998 442

## Description

The present invention concerns a robot system for automated performance of working operations in open structures in the heavy industries, comprising a portal structure having at least two parallel longitudinal girders provided with travelling paths (X direction) to support engagement parts at each end of at least one transverse robot gantry, which comprises a carrier girder having travelling paths (Y direction) to support engagements parts on a robot arm, said robot arm having an upper end which may be advanced at a maximum height (L) above the carrier girder and a lower part which may move in an upward and downward direction (Z direction), and which has a lower working head to perform said operations. The robot arm may e.g. constitute a rigid lifting column movable by means of a rack mechanism between an upper position in which the upper end of the robot arm is positioned at the height (L), and a lower position. Alternatively, the robot arm may be telescopic and comprise an upper envelope part whose upper end is positioned at the height (L).

The robot system preferably serves to perform working operations such as welding and painting operations, but also other types of treatment operations as well as handling operations may be involved. The systems moreover have a size enabling them to accommodate open structures having a considerable length in the X direction. Such systems may e.g. be robot systems for automated performance of welding operations in open ship's sections at a shipyard.

Systems are known today which are capable of accommodating sections of a length of up to about 17 m which are oriented in the X direction. These known systems have a headroom of maximum 6 m and thus cannot accommodate sections having parts which rise more than 6 m from the supporting level below the system.

For reasons of competition it is desired today in the industries of the Western world and particularly in the shipbuilding industry that the working and handling time may be reduced, both during the performance of the necessary working operations in the section concerned and very much also during the subsequent operations of assembling the individual sections to provide the finished unit, such as a ship. A consequent natural wish is that the system should be capable of working with spatial structures as large as possible, thereby minimizing the manual work in the section itself and also in the subsequent operations of assembling the individual sections.

In practice, the approach most widely used today is to employ portal structures having travelling cranes which, via lifting devices, e.g. in the form of telescopic lattice structures, lift welding machines from cavity to cavity where welding is to be performed e.g. in a hull section. When the welding machine is arranged in a cavity, it is positioned manually by an operator which monitors the continued welding. Each time a welding machine is moved to a new cavity, time-consuming positioning and start programming have to be performed again by an operator. No fully automated robot system is thus involved.

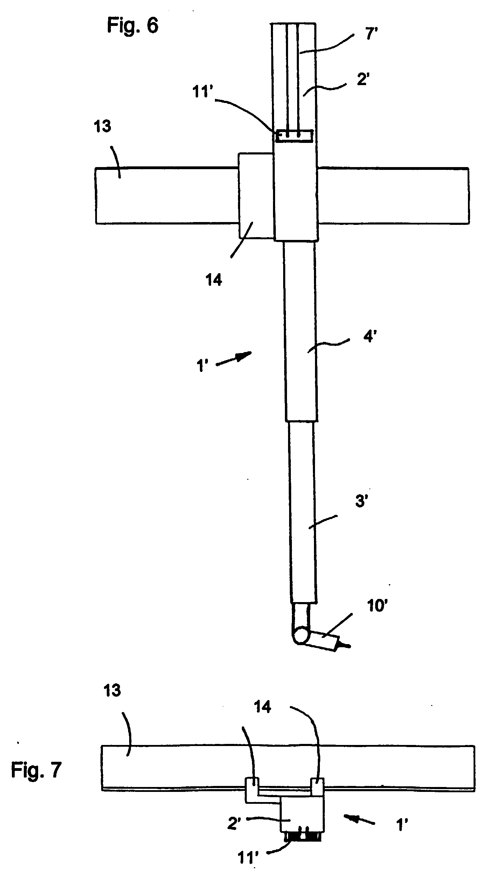

International Encyclopedia of Robotics: Applications and Automation, vol. 3, 1988, pages 1588-1589 proposes an automated robot system in fig. 6, where the robot gantry per se is constructed as an inverted U-shaped portal supported on travelling paths disposed substantially at the supporting level of a hull section in which welding operations are to be performed. The system can just accommodate sections of a limited size, as the U-shaped portals used must be capable of freely travelling inwardly over the section. The prospect of an inexpediently large and clumsy and moreover costly construction of the portal must be presumed to be the reason why these systems today just exist with a headroom below the portal of maximum 6 m and a width of maximum 12 m between the travelling paths. The size of the section is hereby reduced correspondingly.

The U-shaped portal used requires an inexpediently long support along the travelling paths. If several portals work in a group along the travelling paths, the consequence will a poor utilization of the capacity within the engagement area, as the long supports make it impossible for the portals to travel close to each other.

These systems moreover comprise a "rigid vertical robot arm" having a lower automatically controlled working head conveyed in the Z direction by the robot arm in rapid motion between various working heights in which the arm is locked, so that it is just the range of the automatically controlled working head which is utilized at the height concerned. When the rigid robot arm is locked at the upper height level, additional headroom is required above the portal substantially corresponding to the length of the arm. If the system is mounted in a building, the headroom in the building must thus correspond to the headroom of the portal + the length of the rigid robot arm, which corresponds to 6 + 4 m = 10 m in these systems.

DD Patent Specification 222814A proposes a robot system of the type mentioned in the opening paragraph, in which the robot gantry is formed by a portal carriage which runs to and fro on the longitudinal girders of the portal structure.

The portal carriage is constructed as a box-shaped transverse girder having a substantial supporting length in the X direction. When the system comprises several carriages in the same working group, these cannot therefore run sufficiently close to each other, as is also the case with the known systems previously mentioned, resulting in poor utilization of the capacity in the work area of the system. The system of the DD patent specification moreover requires additional headroom above the portal carriage for the upwardly extending rigid robot arm. A system of this type used in practice can accommodate a ship's section of a length in the Y direction of maximum about 17 m and a height of maximum 6 m. The system exclusively works with rigid robot arms like the above-mentioned system and therefore also requires a considerable additional headroom above the portal carriage of about 5 m and therefore a headroom in the building of 11 m in practice.

Accordingly, there has been a long-felt need for a robot system which is capable of accommodating considerably larger structures in its work area than known before, and which moreover has a higher capacity utilization in operation.

The robot system of the present invention is characterized in that the carrier girder of the gantry is provided at a distance below the upper side of the longitudinal girders, said distance corresponding at least to the maximum height (L) of the robot arm above the carrier girder.

This provides a robot system which can accommodate considerably higher structures in its work area than known before. When the robot arm is supported by the carrier girder at a distance below the upper side of the longitudinal girder, the robot arm is retained stably in the vicinity of the working face, while still allowing upwardly extending structural ship's parts to be advanced between the robot gantries. The spatial height space required by the robot system is moreover limited to the outer boundary of the portal structure. If the system is mounted in a building, the headroom thereof can therefore be utilized fully, as the robot arm can move within the boundaries determined by e.g. a roof structure which covers the portal structure at the upper side of the longitudinal girders. Further, a surprisingly high capacity utilization of the system is achieved in operation.

In a particularly preferred embodiment, as defined in claim 2, the longitudinal girder of the gantry is provided at a distance below the underside of the longitudinal girders, said distance corresponding at least to the maximum height (L) of the robot arm, while the travelling paths of the robot arm engagement parts extend outwards below at least one longitudinal girder.

The robot arm can hereby move into the area below the longitudinal girders with its upper end advanced at the height (L) above the carrier girder so as to achieve a considerably longer travelling distance in the Y direction than provided by the known robot systems, where this distance is limited to the spacing between the longitudinal girders. According to the invention, it is hereby also possible to utilize the space in the work area which is below the longitudinal girders, and which can constitute hundreds of square metres with the large dimensions of the beams.

According to another advantageous embodiment of the invention, as stated in claim 3, the longitudinal girders of the portal structure moreover comprise travelling paths extending in parallel at a distance below upper paths and supporting lower engagement parts at each end of the transverse robot gantry. This form of support ensures an extremely good and safe retention of the robot gantry, resulting in minimum deflections of the downwardly extending robot arm in the X direction, particularly during start and stop, but also during changes in the velocity of the gantry during its travel in the X direction.

The upper and the lower travelling paths are mutually spaced vertically, which ensures that the robot gantry and thereby its engagement parts just have to be supported to a small extent in the X direction - seen in relation to what is the case with the known systems - to achieve a considerably better support and thereby substantially the same good positioning accuracy for the robot arm working head in the X direction. The headroom below the portal structure may hereby be increased considerably, seen in relation to the known systems. A headroom of up to 3-4 times the known 6 m thus appears to be possible. Further, a greater utilization of the flexibility of the system in the X direction will also be achieved, as several robot gantries can work partly closer to each other, partly within a larger work area, seen in relation to the entire extent of the system.

A particularly stable support of the robot gantry and an extremely great positioning accuracy in the X direction are achieved when the lower travelling paths of the longitudinal girders are positioned at a distance below the upper travelling paths of between 1/25 and 1/2 of the headroom below the longitudinal girders.

In a particularly advantageous embodiment, the carrier girder of the robot gantry may be provided at a distance of between 1/4 and 1/2 of the headroom below the lower travelling paths of the longitudinal girders. Such a location has been found to be advantageous in view of the robot arm rigidity at the working level, particularly considering that the working head must be able to assume a stable working position. Alternatively, the carrier girder may be provided at a distance of between 1/4 and 1/2 of the headroom below the underside of the longitudinal girders.

According to the invention, the actual maximum headroom may be utilized fully by e.g. upwardly extending plate parts on the structure in which the working operations are to be performed. Thus, several robot gantries may be involved, whose robot arms work in cavities in the structure at both sides of said upwardly extending plate parts, which may extend up to the maximum headroom.

Particularly expediently, the lower travelling paths of the longitudinal girders and associated engagement parts may comprise rack guides and associated driven gear wheels.

A further expansion of the work area in the Y direction may be achieved, when the downwardly extending robot arm is secured laterally offset, seen in relation to the support of the engagement parts on the travelling paths of the carrier girders. This may be an advantage particularly when the portal structure comprises three or more parallel longitudinal girders having travelling paths to support two or more robot gantry groups operating in parallel, as the work areas of the groups may be arranged quite close to each other so that they overlap each other.

According to another embodiment, as stated in claim 10, the robot arm is substantially vertical and has supply lines extending to the working head, and is characterized by comprising an upper envelope part on which the engagement parts are mounted and which is connected via connecting means and optionally intermediate telescope parts with a lower telescope part adapted to fit in the envelope part in an upper position and to be retained in lower positions via the connecting means in extension of the envelope part at optional heights.

This provides a robot system for use in the heavy industries, wherein the robot arm can operate automatically controlled and optionally continuously after start in the entire spatial extent of the work area, while, in any position, the robot arm has an extent which is within the outer boundary of the portal structure.

The vertical robot arm is movably mounted on the transverse robot gantry of the portal structure. Telescopic extension and retraction of the robot arm in the operation of the system provides continuous automatic control in the vertical direction (Z direction), and movement of the robot gantry and the telescopic robot arm, respectively, provides continuous automatic control in the X and the Y direction within the entire work area of the robot system.

This has been made possible by the new embodiment of the invention, which surprisingly ensures that the dynamic loads particularly at the engagement parts of the robot arm are sufficiently small, while providing sufficient acceptable positioning tolerances.

In a particularly expedient embodiment of the robot arm, the envelope part, optionally intermediate telescope parts and the lower telescope part are made of a plate-shaped material. This results in a telescope arm of great rigidity and deflection stability when taking the size of the system into consideration, which ensures particularly small dynamic loads and precise positioning of the lower end of the telescopic arm. Also, a relatively simple and light telescopic arm is obtained, which reduces the requirements made with respect to the carrying capacity of the rest of the robot system and particularly the carrying capacity of the engagement parts of the robot arm.

In another advantageous embodiment, slide guides are provided between the mutually movable parts of the arm with a view to safe retention and control of the parts. These guides moreover ensure precise horizontal positioning of the working head under dynamic loads.

In still another advantageous embodiment, the supply lines are run via an inlet opening in the envelope part further up via a space between the side wall of the envelope part and the opposed most adjacent side wall of a telescope part, and further down to the working head. It is hereby ensured that the supply lines are shielded so that they will not be subjected to damage, and the supply lines are run along a determined path so that no inexpedient sharp bends, etc. will be imparted to them.

In an advantageous embodiment of the invention, the space is shaped as a recess, which results in a more precise and safe guide of the supply lines.

The inlet opening may moreover be provided in the side wall of the envelope part through which the supply lines extend. This allows the supply lines to be introduced at any location in the side wall of the envelope part.

In a particularly expedient embodiment, the supply lines are secured to the side wall of the envelope part at the inlet opening. This provides a safer guide of the supply lines, as they do not hang loosely and therefore do not tend to be damaged.

According to a further embodiment, at least one intermediate telescope part is interposed between the envelope part and the lower telescope part. The use of intermediate telescope parts results in a structure which has a smaller extent in the longitudinal direction in the retracted state. It is moreover possible to use a shorter envelope part, so that the working head can assume a higher position, which increases the vertical extent of the work area.

In a further, advantageous embodiment, the connecting means are formed by a line connected with line winding pull element. Thus, the working head may be positioned in an arbitrary vertical position via a simple winder mechanism, which may be controlled numerically.

In a further, expedient embodiment, the ends of the line are connected with a crane hoisting winch, so that the line forms a loop connected with the lower telescope part. It is hereby possible to use a relatively thin line which takes up less space in the coiled state.

Particularly advantageously, in connection with the described robot arm, and as described in claim 21, the robot gantry may comprise a further beam structure which extends in parallel with the carrier girder at a distance of maximum (L) above the carrier girder, and which has travelling paths (Y direction) to support further engagements parts on the envelope part of the robot arm.

A particularly advantageous use of the robot system of the invention, as stated in claim 22, is the performance of welding operations in the shipyard industry.

The invention will be explained more fully below with reference to a particularly preferred embodiment and the drawing. In the drawing:
fig. 1 is a perspective view of a robot system for welding open hull sections,
fig. 2 is an end and schematic view partially in vertical cross-section of the area where the transverse robot gantry engages a longitudinal girder,
fig. 3 is an end view of the robot welding system show in fig. 1,
fig. 4 is a top schematic view of the ends of adjoining robot gantries from their respective ones of two groups operating in parallel,
fig. 5 is a perspective view of another embodiment of a portal structure during work on a ship's structure with high transverse elements and lower longitudinal elements,
fig. 6 is a lateral view of the telescopic robot arm, where the working head is formed by a welding head, and
fig. 7 is a top view of the same with engagement parts movably mounted on a travelling path,
fig. 8 is a lateral sectional view of the same in a fully extended position,
fig. 9 is a lateral sectional view of the same in a fully retracted position,
fig. 10 is a sectional top view of the same,
fig. 11 is an enlarged top fractional view of the same.

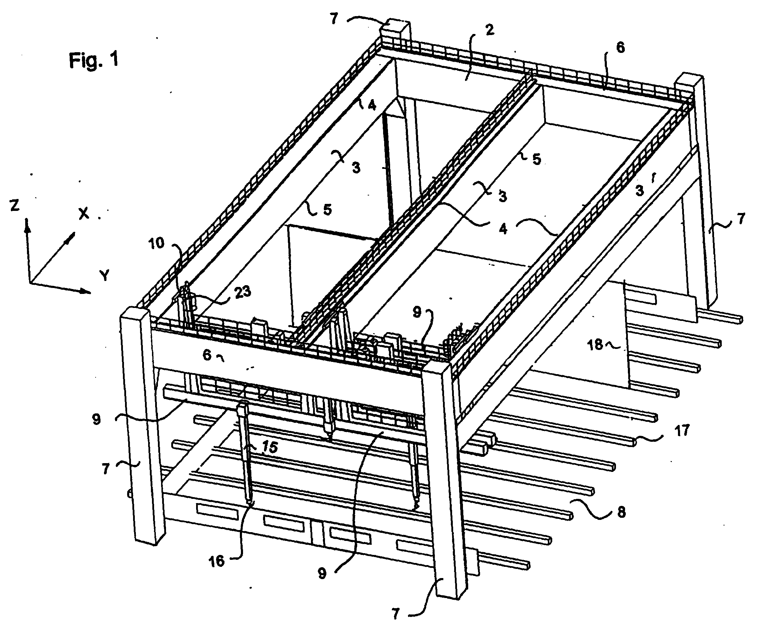

The robot system shown in fig. 1 is adapted for automated performance of welding operations in open structures, such as hull structures.

The system 1 comprises a portal structure 2 having three opposed, parallel longitudinal girders 3 provided with upper and lower travelling paths 4, 5 (X direction). The longitudinal girders 3 of the system 1 are retained in a frame by means of transverse end girders 6. One longitudinal girder 3 is positioned as a central longitudinal girder. The frame is supported by means of columns 7 and is secured at each corner at the upper end by the column 7 concerned. The portal structure 2 hereby has a headroom corresponding to the distance from the underlying working level 8 and up to the underside of the longitudinal girders 3.

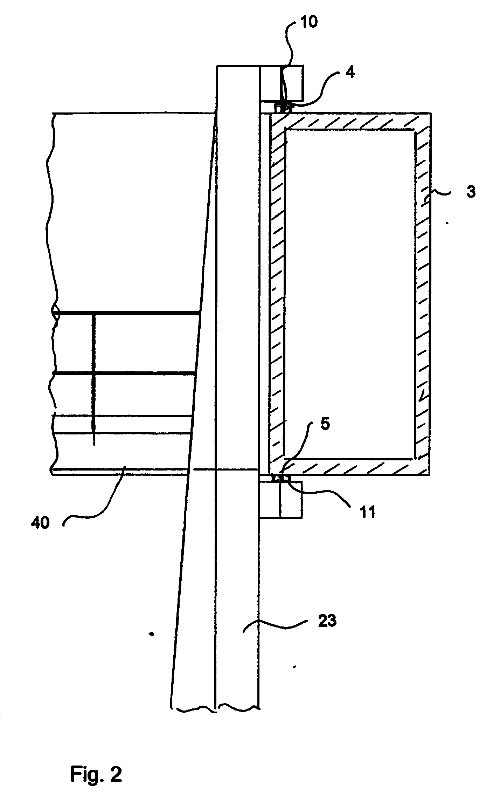

In the embodiment shown, the longitudinal girders 3 of the system are constructed as closed box profiles with the upper travelling paths 4 positioned on upwardly directed faces and the lower travelling paths 5 positioned on downwardly directed faces 5, see fig. 2. However, many other embodiments of the longitudinal girders and the positions of the travelling paths are possible within the idea of the invention. For example, also open profiles, such as U or I profiles, may be used, and both the upper and the lower travelling paths may conceivably be provided on faces other than horizontal ones, such as inclined or vertical faces e.g. on engagement strips or profiles.

In an embodiment particularly useful in practice, the upper travelling paths are formed by upwardly directed faces on strips of rectangular profile, and the associated upper engagement parts are formed by rollers having "collars" at the ends fitting beyond the sides of the strip and guiding the roller along it.

The robot welding system 1 moreover comprises transverse robot gantries extending between opposed pairs of parallel longitudinal girders 3. At each end, the robot gantries 9 are provided with upper and lower engagement parts 10 and 11, respectively, supported against the upper and lower travelling paths 4 and 5, respectively, of the adjacent longitudinal girder.

In the shown embodiment of the robot welding system 1, this comprises two groups of robot gantries 9 working in parallel. In the embodiment shown in fig. 1, only one robot gantry 9 is shown in the left "group" for clarity, and just two robot gantries 9 are shown in the right "group". In practice, however, a larger number of robot gantries will be included in each group, e.g. about 3-6 gantries.

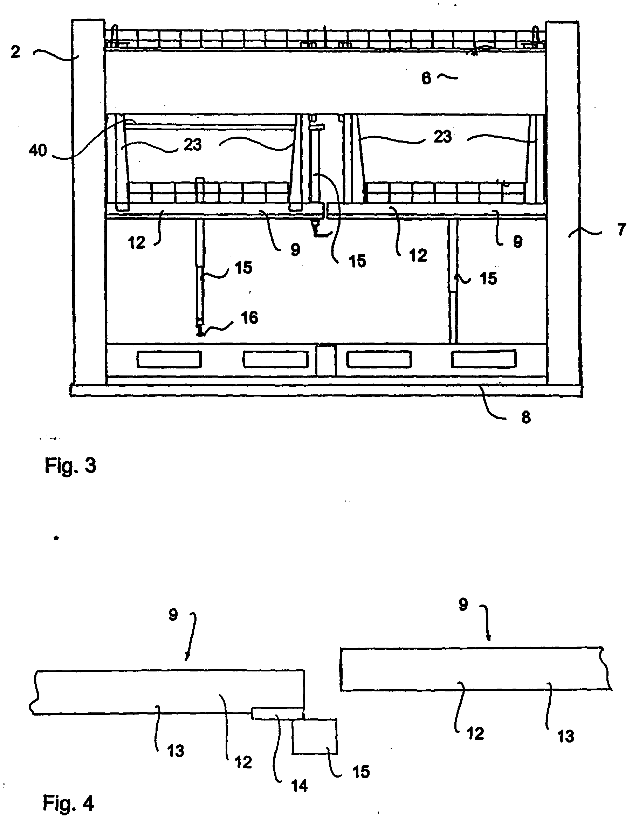

Each of the robot gantries 9 comprises a carrier girder 12 which is secured at the ends to vertical holding parts 23, see in particular fig. 3. The upper and lower engagement parts 10, 11, see fig. 2, are also mounted on the holding parts 23. In particularly sturdy and practical embodiments, the lower travelling paths 5 and associated engagement parts 11 of the longitudinal girders 3 may comprise rack guides and associated, driven gear wheels. The robot gantries 9 moreover comprise a further girder 40, which is shown in fig. 2, and whose purpose will be explained more fully below.

In the embodiment shown in fig. 2, the lower travelling paths 5 of the longitudinal girders are positioned at a distance of about 3 m below the upper paths, which substantially corresponds to the profile height of the box-shaped longitudinal girder. The headroom of the system is 13 m. The carrier girder 12 of the gantry 9 is provided at a distance below the longitudinal girders 3. In operation, the robot gantry 9 is supported by both upper and lower engagement pats 10, 11 at each end on the upper and lower travelling paths 4, 5 of the longitudinal girders. This surprisingly ensures a good and safe retention and support of the gantry 9 with minimum deflections of a downwardly extending robot arm 15 in the X direction, in particular during start and stop thereof, but also during changes in the gantry velocity during its travel in the X direction.

The carrier girders 12 of the robot gantries 9 comprise travelling paths 13 (Y direction) to support engagement parts 14 on the downwardly extending robot arm 15. This is shown in greater detail in fig. 4, which shows the outermost ends of two carrier girders 12, i.e. the carrier girder parts extending at a distance from the vertical holding parts 23.

According to the invention, the upper side of the carrier girders 12 of the robot gantry 9 is provided at a distance below the upper side of the longitudinal girders corresponding to at least the distance 'L', and the carrier girder may particularly be provided at the distance 'L' below the underside of the longitudinal girders 3, as shown particularly in fig. 3, where the dimension 'L' is indicated. The distance 'L' is determined by the upwardly extending part of the robot arm 15 and corresponds to the height above the carrier girder 12 measured to the upper side of the robot arm 15 when the upper side of the robot arm 15 is advanced at a maximum height above the carrier girder 12. Precisely by arranging the carrier girder 12 at a special minimum distance with respect to the underside of the longitudinal girders 3, a further advantage is achieved in that the robot arm 15 may be moved inwardly below the longitudinal girders and thereby have considerably longer travelling distance in the Y direction than in the known robot systems, where this distance is limited to the spacing between the longitudinal girders because of the upwardly extending part of the robot arm.

As mentioned above, the robot gantry 9 may advantageously be provided with a further girder 40 extending in parallel with the carrier girder at e.g. the height 'L' above it. This is particularly expedient when using telescopic robot arms having a fixed upwardly extending envelope part, as described below with reference to fig. 6. In this case, the upper end of the robot arm envelope part is advanced at a fixed height 'L' above the carrier girder, and thereby it can additionally serve as a supplementary bracing or stabilising element for the robot arm.

Further, in a particularly expedient embodiment, the downwardly extending robot arm 15 may be secured laterally offset, seen in relation to the support of the engagement parts 14 of the robot arm 15 on the travelling paths 13 of the carrier girder 12, as shown in fig. 4. This may be an advantage particularly when the portal structure comprises three or more opposed parallel longitudinal girders with travelling paths to support two or more robot gantry groups operating in parallel, as the work area of the groups may hereby be positioned quite close to each other and even overlap each other. As shown in fig. 4, it is expedient if the robot arm, in the position where it has travelled right out to the end of its travelling path 13, can still unobstructedly pass the end of the longitudinal girder 12 of the opposed robot gantry 9 in the next working group operating in parallel. However, it will also be possible to arrange the robot arm offset in a laterally reversed manner on the two opposed robot gantry groups operating in parallel, so that the work areas overlap each other to a considerable degree.

As will be appreciated, the described "headroom" above the carrier girders may be utilized fully when the robot arm is e.g. formed with a fixed, upwardly extending envelope part, as described below, or alternatively as a vertically slidable supporting column, as illustrated in the above-mentioned encyclopedia. In the latter case, the robot arm requires a "headroom" above the gantry carrier girder, which may e.g. correspond to the distance from the carrier girder and down to the supporting level.

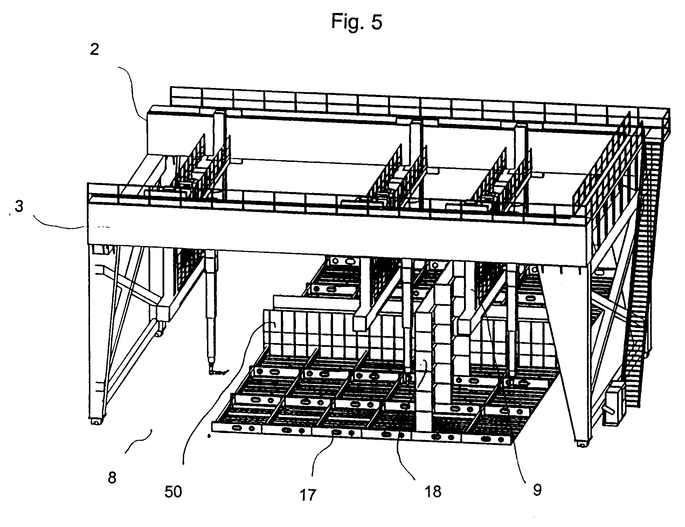

It is schematically shown in figs. 1 and 5 how a part of a hull section 17, in which welding is to be performed, is inserted below the portal structure 2. The hull section 17 may comprise many upstanding plate parts 18 which may extend up to the full headroom from the working level 8 and up to the longitudinal girders 3. When these plate parts 18 extend substantially transversely to the portal structure up to the vicinity of the longitudinal girders forming intermediate cavities in which welding is to be performed, the robot gantries 9 may have been run into position opposite these cavities before the hull section 17 is arranged below the portal structure 2. Nevertheless, the necessary working operations may be performed by means of the robots, which are supported stably by the carrier girders at a low height above the working level 8. The hull structure may moreover comprise transverse, upstanding plate parts 50, which define said cavities, and which, in accordance with common shipbuilding practice, will have a height above the working level 8 which is somewhat smaller than the height of the plate parts 18, enabling them to be unobstructedly moved inwardly below the robot gantry 9. When the hull structure is inserted into position below the portal structure 2, the robot gantries 9 concerned can then operate freely within their respective ones of said cavities defined by opposed upstanding plate parts 18. This results in an unprecedented high capacity utilization, as the robot gantries concerned can operate freely and simultaneously within their respective cavities.

The invention provides a surprising increase in the headroom below the portal structure, seen in relation to the known systems. In the present embodiment, the system has a headroom of about 13 m, which corresponds to more than a doubling of the headroom in the known systems of maximum 5-6 m. It is hereby possible to perform working operations in structures with upstanding parts which have twice the height of what has been known before. The system length in the X direction is also increased to more than the double of the known structures, thereby enabling it to accommodate hull sections of a length in the X direction of 40 m in the work area. Further, the extent of the engagement parts in the X direction may be minimized so that the gantries 9 in the same work group can operate extremely close to each other, thereby utilizing a maximum operating capacity within the work area. The embodiment with support of the engagement parts and position of the carrier girders thus provides an extremely advantageous support of the gantry, which is both particularly stable and minimizes the space requirement. It is moreover contemplated that the actual portal structure may be supported by wheels so that it may be advanced from one location to another.

No matter whether the robot arm is formed by a "rigid rod" (e.g. a lifting column) or by a telescope arm 15, the system of the invention provides surprisingly good positioning accuracies, considering the size of the system and the large headroom below the portal structure. These positioning accuracies have been found to be sufficiently acceptable for automatically controlled work to be performed also in the Z direction. Thus, the first automatically controlled robot system is hereby provided for performing working operations in open structures in the heavy industries, where, in addition to operating in the X, Y directions, the system can also operate automatically controlled in the perpendicular Z direction, while maintaining sufficiently good positioning accuracies for the working head. In the embodiment shown, the robot arm is constructed as a telescope arm 15 or a rigid arm, and the working head is formed by an automatically controlled welding head 16.

The system comprises programmable control units (not shown) to control the movements of the robot gantries along the travelling paths in the X direction, to control the movement of the robot arm in the Y direction, to control the movement of the robot arm in the Z direction, and to control the degree of freedom for the movement of the lower working head. The entire system can hereby be controlled automatically via a computer by just one operator. Further, welding may be begun in a large number of cavities in the hull section. The welding head 16 at the end of the telescope arm 15 concerned will automatically be moved down to the adjacent cavity in which welding is to be performed, and automatic sensing may be provided, following which welding is begun even in corners of difficult access and is continued until the cavity concerned has been welded completely. This results in an extremely great utilization degree of the work area, as all the necessary working processes within the area concerned may be automated, so that work is performed at as many locations as possible within the area to complete the total welding work as early as possible.

Figs. 6-11 show a particularly advantageous embodiment of a robot arm for use in connection with the robot system described.

The telescopic robot arm 1' shown in fig. 6 comprises a tubular upper envelope part 2' having engagement parts 14 supported by a travelling path 13, which, in the embodiment shown, is secured to a robot gantry (not shown) of the type described above. The envelope part 2' is connected with a tubular lower telescope part 3' via connecting means formed by a steel wire 7' and an intermediate tubular telescope part 4'. The intermediate telescope part 4' is connected at its upper end with the lower end of the envelope part 2' and connected at its lower end with the upper end of the telescope part 3'.

Both the envelope part 2' and the telescope parts 3', 4' are made of a plate-shaped material. In the embodiment shown, they are bent in steel, but they might also be made of e.g. a composite material, thereby providing an even lighter robot arm.

The telescope parts 3', 4' are adapted to fit in the envelope part 2' in an upper position and to be secured in lower positions via the steel wire 7' in extension of the envelope part 2' at optional heights. A working head (not shown) performing the working operations is secured at the lower end of the lower telescope part 3'.

Supply lines 13' extending down to the working head are run into the envelope part 2' via an inlet opening 8' and further up via a space 12' between the side wall of the envelope part 2' and the opposed most adjacent side wall of the intermediate telescope part 4' and further down to the working head.

As mentioned above, the connecting means are formed by a steel wire 7' whose ends are connected with a crane hoisting winch 11', which is secured externally on the envelope part 2'. The centre of the steel wire 7' is connected via firm rollers 14', arranged at the top of the envelope part 2', with the lower telescope part 3' via another roller 15', so that the steel wire 7' forms a loop engaging the roller 15', which is secured to the upper end of the lower telescope part 3'. In another embodiment (not shown), the steel wire may be arranged e.g. via pulleys/rollers in such a manner that transmission takes place.

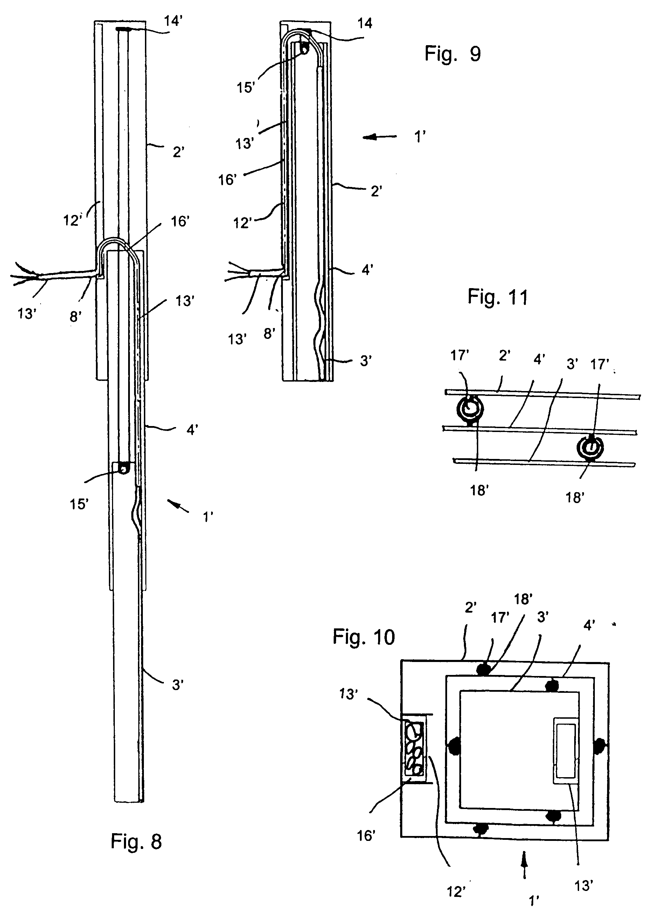

The cross-section of the intermediate telescope part 4' is smaller than the cross-section of the envelope part 2' and greater than the cross-section of the lower telescope part 3'. It is thus possible to insert the telescope parts 3', 4' completely into the envelope part 2', as shown in fig. 9.

Since the steel wire 7' is connected with the lower telescope part 3' and the envelope part 2' via a crane hoisting winch 11', it is possible to retain the lower telescope part 3' at an optional height from the envelope part 2'. Thus, coiling-up of the wire 7' reduces the distance from the envelope part 2' to the lower telescope part 3', and slackening of the wire 7' increases the distance between the envelope part 2' and the lower telescope part 3', as the force of gravity will affect the lower telescope part 3' in a downward direction. The crone hoisting winch 11' is driven by an electric motor, which is numerically controlled and mounted on the outer side of the envelope port 2'.

Slide guides (see figs. 10 and 11) are interposed between the two telescope parts 3', 4' and between the intermediate telescope part 3' and the envelope part 2'. The slide guides comprise circular rods 17' arranged in parallel with the robot arm and internally in the envelope part 2' and the intermediate telescope part 4', as well as cooperating slides 18' guided externally on the rods 17', which are mounted externally on the intermediate telescope part 3' and the lower telescope part 4'. The slide guides hereby ensure that the mutually movable parts of the robot arm are guided safely secured in a vertical direction with respect to each other.

In the embodiment shown, a total of six slide guides is provided, but this number may vary depending on e.g. the desired positioning accuracy. Finally, it should be noted that the rods 17' might also be mounted externally and the slides 18' internally.

The combination of plate material and slide guides has surprisingly made the telescopic robot arm particularly advantageous for systems in the heavy industries.

Further, stops (not shown) are provided between said parts so that the telescope parts 3', 4' and the envelope part 2' are always connected with each other. It is noted that the guides and the stops may be provided in many different ways; e.g. also roller guides might be used, or the rods and the slides might be constructed differently.

When, like in the example shown, slide guides are involved, with the slides 18' guided externally on profile rails, such as the shown rails 17' of circular cross-section, it should be noted that the slides 18' may also be guided internally in profile rails.

It should additionally be noted in this connection that the position of the stops influences the size of overlap between the telescope parts 3', 4' and the envelope part 2' in the lower position of the telescopic robot arm 1' (the position where the distance between the lower telescope part 3' and the envelope part 2' is greatest). Further, it should be noted that the overlap does not have to be as large as shown in fig. 8, but depends on the length and the rigidity of the envelope and telescope parts 2', 3', 4', the desired precision, guide type, use, etc.

Thus, the intermediate telescope part 4' just performs horizontal positioning of the lower telescope part 3' with respect to the envelope part 2', while the steel wire 7' performs the vertical positioning of the lower telescope part 3'.

The supply lines 3' shown in figs. 8-10 are comprised by a cable chain 16' and are formed by hoses for protective gas and suction, welding wire, power supply lines and electric wires to control the welding head. In the embodiment shown, the cable chain 16' extends from the inlet opening 8', where it is secured, and into a recess 12' provided in the space between the envelope part side wall and the opposed most adjacent side wall of the intermediate telescope part.

In a fully extended position of the telescopic robot arm 1', the cable chain 161, immediately after having been inserted through the inlet opening 8' and into the recess 12', will be passed upwardly over the upper edge of the intermediate telescope part 4' in an area in the envelope part 2' which is substantially at the same level as the inlet opening 8', as shown in fig. 8. Then, the cable chain 16' first extends down through the interior of the intermediate telescope part 4' and thereafter down through the interior of the lower telescope part 3' and further down to the working head.

In a fully retracted position of the telescopic robot arm 1', the cable chain 16', immediately after having been inserted into the inlet opening, runs upward through substantially the entire recess 12' to an area around the internal top of the envelope part 2', as shown in fig. 9. Then, the cable chain 16' runs upward over the upper edges of the telescope parts 3', 4' and down through the total interior of the envelope part 2' and the telescope parts 3', 4'.

The cable chain 16' ensures mutual retention of the supply lines 13', without any sharp bends or the like in the supply lines 13'. Finally, the cable chain 16' ensures that the supply lines 13 are turned only in the desired direction.

The engagement parts 14 of the robot arm are secured to the envelope part 2' and are supported on a travelling path 13, as shown in figs. 6 and 7. The guides are of a known type with rack control.

Fig. 6 moreover shows a welding head 10' secured to the lower telescope part 3'. In the shown embodiment, the welding head 10' shown in fig. 6 is adapted to perform MIG/MAG welding with pipe wire using CO₂ as protective gas. The welding head 10' may be turned in various angles, thereby allowing welding in areas of difficult access, such as e.g. cavities.

The shown telescopic robot arm for robot systems for automated performance of welding operations in open structures in the heavy industries has been found particularly expedient in connection with welding of large marine structures where robot gantries are used.

It is noted that the telescopic robot arm 1' of the invention may also be used for automated performance of other working operations, such as e.g. painting, cutting, assembling, etc. in these cases it is just necessary to mount a second working head at the lower telescope part and to mount other supply lines.

In the embodiment shown, the envelope part 2' and the telescope parts 3', 4' are shown to be square, but they may have any cross-section according to the invention. Thus, they might e.g. be circular, triangular, etc. and also open profiles, such as e.g. U and I profiles, may be used.

Many modifications may be made without departing from the idea of the invention. In the embodiment shown, the supply lines 13' are e.g. comprised by a cable chain 16' which accommodates the necessary hoses and lines, but the cable chain may be omitted.

It is likewise possible to perform other types of welding, and, as regards MIG/MAG welding, changes may be made with respect to wire type, protective gas, power strength, etc.

The carrier girders of the robot gantries may be positioned at many different heights to achieve the desired rigidity and deflection accuracy in the X direction. Also, the system may be designed for many different types of working operations other than welding. Such operations may e.g. be welding operations and handling operations of plate parts.

## Claims

1. A robot system (1) for automated performance of working operations in open structures (17) in the heavy industries, comprising a portal structure (29) having at least two parallel longitudinal girders (3) provided with travelling paths (4) in X direction to support engagement parts (10) at each end of at least one transverse robot gantry (9), which comprises a carrier girder (12) having travelling paths (13)in Y direction to support engagement parts (14) on a robot arm (15), said robot arm (15) having an upper end which may be advanced at a maximum height (L) above the carrier girder (12), and a lower part which may move in an upward and downward direction in Z direction, and which has a lower working head (16) to perform said operations, **characterized** in that the carrier girder (12) of the gantry (9) is provided at a distance below the upper side of the longitudinal girders (3), said distance corresponding at least to the maximum height (L) of the robot arm above the carrier girder (12).

2. A robot system according to claim 1, **characterized** in that the carrier girder (12) of the gantry (9) is provided at a distance below the underside of the longitudinal girders (3), said distance corresponding at least to the maximum height (L) of the robot arm above the carrier girder (12), and that the travelling paths (13) of the robot arm engagement parts extend outwardly below at least one longitudinal girder (3), so that the robot arm (15) may be moved into the area below the longitudinal girder (3) with its upper end advanced at the height (L) above the carrier girder.

3. A robot system according to claim 1 or 2, **char**acterized in that the longitudinal girders (3) of the portal structure (2) comprise upper and lower travelling paths (4, 5), said lower travelling paths (5) extending in parallel at a distance below the upper paths (4) and supporting lower engagement parts (11) at each end of the transverse robot gantry (9).

4. A robot system according to claim 3, **characterized** in that the lower travelling paths (5) of the longitudinal girders (3) are positioned at a distance below the upper travelling paths (4) of between 1/25 and 1/2 of the headroom below the longitudinal girders (3).

5. A robot system according to any of the preceding claims**,characterized** in that the carrier girder (12) of the robot gantry (9) is provided at a distance below the lower travelling paths (5) of the longitudinal girders (3) of between 1/4 and 1/2 of the headroom below the longitudinal girders (3).

6. A robot system according to any of the preceding claims 3-5, **characterized** in that the lower travelling paths (5) of the longitudinal girders (3) and associated engagement parts (11) comprise rack guides and associated, driven gear wheels.

7. A robot system according to any of the preceding claims, **characterized** in that the robot arm (15) is secured laterally offset in the Y direction, seen in relation to the support of the robot arm engagement parts (14) on the travelling paths (13) of the carrier girders (12).

8. A robot system according to any of the preceding claims, **characterized** in that least one longitudinal girder comprises several upper travelling path.

9. A robot system according to any of the preceding claims, **characterized** in that the portal structure (2) comprises three or more parallel longitudinal girders (3) having travelling paths to support two or more groups of robot gantries (9) working in parallel.

10. A robot system according to any of the preceding claims, comprising a substantially vertical robot arm (15) having supply lines (13') extending to the working head, **characterized** in that the robot arm comprises an upper envelope part (2') on which the engagement parts (14) are mounted, and which is connected via connecting means (7') and optionally intermediate telescope parts with a lower telescope part (3') adapted to fit in the envelope part (2') in on upper position and to be secured in lower positions via the connecting means (7') in extension of the envelope part (2') at optional heights.

11. A robot system according to claim 10, **characterized** in that the envelope part (2') and the optionally intermediate telescope parts and the lower telescope part (3') are made of a plate-shaped material.

12. A robot system according to claim 10 or 11, **characterized** in that slide guides are provided between the mutually movable parts of the arm with a view to mutual retention and control of the parts.

13. A robot system according to claim 10, **characterized** in that the supply lines are run in via an inlet opening in the envelope part (2') and further up via a space between the side wall of the envelope part (2') and the opposed most adjacent side wall of a telescope part and further on down to the working head.

14. A robot system according to claim 13, **characterized** in that said space is shaped as a recess (12').

15. A robot system according to claim 13 or 14, **characterized** in that the supply lines (13') are run down through the interior of the telescope parts (3', 4').

16. A robot system according to claims 13-15, **characterized** in that the inlet opening (8') is provided in the side wall of the envelope part (2').

17. A robot system according to claims 13-16, **characterized** in that the supply lines (13') are secured to the side wall of the envelope part (2') at the inlet opening (8').

18. A robot system according to claim 10, **characterized** in that at least one intermediate telescope part (4') is interposed between the envelope part (2') and the lower telescope part (3').

19. A robot system according to claim 10, **characterized** in that said connecting means are formed by at least one line (7') which is connected with the lower telescope part (3'), and a line winder pull element (11') secured with respect to the envelope part (2').

20. A robot system according to claim 19, **characterized** in that the ends of the line are connected with a line winder pull element (11'), and that the centre of the line (7') is connected via rollers (14') with the lower telescope pert (3') via a roller (15') so that the line (7') forms a loop.

21. A robot system according to any of the preceding claims 10-20**, characterized** in that the gantry (9) comprises a further beam structure (40), which extends in parallel with the carrier girder (12) at a maximum distance(L) above the carrier girder (12), and which has travelling paths (Y direction) to support further engagement parts on the robot arm (15).

22. Use of a robot system according to any one of the preceding claims to perform working operations in the shipyard industry.

## Patentansprüche

1. Robotersystem (1) zur automatisierten Ausführung von Arbeitsoperationen in offenen Konstruktionen (17) in Schwerindustrien, mit einem Portalaufbau (2) , der zumindest zwei parallele Längsträger (3) aufweist, die mit Bewegungsbahnen (4) in einer X-Richtung versehen sind, um Anlageteile (10) an jedem Ende zumindest eines Quer-Roboter-Krangerüsts zu tragen, welches einen Trägerbalken (12) mit Bewegungsbahnen (13) in einer Y-Richtung aufweist, um Anlageteile (14) an einem Roboterarm (15) zu tragen,
wobei der betreffende Roboterarm (15) ein oberes Ende, welches in einer maximalen Höhe (L) über dem Trägerbalken (12) vorbewegt werden kann, und einen unteren Teil aufweist, der in einer Aufwärts- und Abwärtsrichtung in einer Z-Richtung bewegt werden kann und der einen unteren Arbeitskopf (16) für die Ausführung der genannten Operationen aufweist,
**dadurch gekennzeichnet,** daß der Trägerbalken (12) des Krangerüsts (9) in einer Entfernung unterhalb der oberen Seite der Längsträger (3) vorgesehen ist, wobei der betreffende Abstand zumindest der maximalen Höhe (L) des Roboterarms oberhalb des Trägerbalkens (12) entspricht.

2. Robotersystem nach Anspruch 1, **dadurch gekennzeichnet,** daß der Trägerbalken (12) des Krangerüsts (9) in einer Entfernung unterhalb der Unterseite der Längsträger (3) vorgesehen ist,
wobei der betreffende Abstand zumindest der maximalen Höhe (L) des Roboterarmes oberhalb des Trägerbalkens (12) entspricht, und daß die Bewegungsbahnen (13) der Roboterarm-Anlageteile nach außen unterhalb zumindest eines Längsträgers (3) derart verlaufen, daß der Roboterarm (15) in den Bereich unterhalb des Längsträgers (3) mit seinem in der Höhe (L) oberhalb des Trägerbalkens vorbewegten oberen Ende bewegt werden kann.

3. Robotersystem nach Anspruch 1 oder 2, **dadurch gekennzeichnet,** daß die Längsträger (3) des Portalaufbaus (2) obere und untere Bewegungsbahnen (4, 5) aufweisen, daß die unteren Bewegungsbahnen (5) parallel in einer Entfernung unterhalb der oberen Bahnen (4) verlaufen
und die unteren Anlageteile (11) am jeweiligen Ende des Quer-Roboter-Krangerüsts (9) tragen.

4. Robotersystem nach Anspruch 3, **dadurch gekennzeichnet** , daß die unteren Bewegungsbahnen (5) der Längsträger (3) in einer Entfernung unterhalb der oberen Bewegungsbahnen (4) zwischen 1/25 und 1/2 der Bauhöhe unterhalb der Längsträger (3) positioniert sind.

5. Robotersystem nach irgendeinem der vorhergehenden Ansprüche, **dadurch gekennzeichnet** , daß der Trägerbalken (12) des Roboter-Krangerüstes (9) in einer Entfernung unterhalb der unteren Bewegungsbahnen (5) der Längsträger (3) zwischen 1/4 und 1/2 der Bauhöhe unterhalb der Längsträger (3) vorgesehen ist.

6. Robotersystem nach irgendeinem der vorhergehenden Ansprüche 3 bis 5, **dadurch gekennzeichnet** , daß die unteren Bewegungsbahnen (5) der Längsträger (3) und der zugehörigen Anlageteile (11) Zahnstangenführungen und zugehörige angetriebene Zahnräder umfassen.

7. Robotersystem nach irgendeinem der vorhergehenden Ansprüche, **dadurch gekennzeichnet** , daß der Roboterarm (15) in der Y-Richtung seitlich versetzt in Relation zur Abstützung der Roboterarm-Anlageteile (14) auf den Bewegungsbahnen (13) der Trägerbalken (12) gesichert ist.

8. Robotersystem nach einem der vorhergehenden Ansprüche, **dadurch gekennzeichnet** , daß zumindest ein Längsträger mehrere obere Bewegungsbahnen umfaßt.

9. Robotersystem nach irgendeinem der vorhergehenden Ansprüche, **dadurch gekennzeichnet** , daß der Portalaufbau (2) drei oder mehr parallele Längsträger (3) mit Bewegungsbahnen umfaßt, um zwei oder mehr Gruppen von Roboter-Krangerüsten (9) zu tragen, die parallel arbeiten.

10. Robotersystem nach irgendeinem der vorhergehenden Ansprüche, umfassend einen im wesentlichen vertikalen Roboterarm (15), der zu dem Arbeitskopf hin verlaufende Versorgungsleitungen (13') aufweist,
**dadurch gekennzeichnet** , daß der Roboterarm ein oberes Mantelteil (2') aufweist, an dem die Anlageteile (14) angebracht sind und das über Verbindungseinrichtungen (7') und gegebenenfalls über Zwischen-Teleskopteile mit einem unteren Teleskopteil (3') verbunden ist, welches in das Mantelteil (2') in einer oberen Stellung hineinzupassen vermag und welches in unteren Positionen über die Verbindungseinrichtungen (7') in einer Verlängerung des Mantelteiles (2') in optionalen Höhen sicherbar ist.

11. Robotersystem nach Anspruch 10, **dadurch gekennzeichnet** , daß das Mantelteil (2') und die optionalen Zwischen-Teleskopteile sowie das untere Teleskopteil (3') aus einem plattenförmigen Material hergestellt sind.

12. Robotersystem nach Anspruch 10 oder 11, **dadurch gekennzeichnet** , daß Gleitführungen zwischen den gegenseitig verschiebbaren Teilen des Armes im Hinblick auf ein gegenseitiges Zurückhalten und Steuern der Teile vorgesehen sind.

13. Robotersystem nach Anspruch 10, **dadurch gekennzeichnet** , daß die Versorgungsleitungen durch eine Einlaßöffnung in dem Mantelteil (2') und weiter nach oben durch einen Raum zwischen der Seitenwand des Mantelteiles (2') und der gegenüberliegenden äußerst benachbarten Seitenwand eines Teleskopteiles sowie weiter nach unten zu dem Arbeitskopf verlaufen.

14. Robotersystem nach Anspruch 13, **dadurch gekennzeichnet** , daß der genannte Raum als Ausnehmung (12') geformt ist.

15. Robotersystem nach Anspruch 13 oder 14, **dadurch gekennzeichnet** , daß die Versorgungsleitungen (13') nach unten durch den Innenraum der Teleskopteile (3', 4') verlaufen.

16. Robotersystem nach den Ansprüchen 13 bis 15, **dadurch gekennzeichnet** , daß die Einlaßöffnung (8') in der Seitenwand des Mantelteiles (2') vorgesehen ist.

17. Robotersystem nach den Ansprüchen 13 bis 16, **dadurch gekennzeichnet** , daß die Versorgungsleitungen (13') an der Seitenwand des Mantelteiles (2') in der Einlaßöffnung (8') gesichert sind.

18. Robotersystem nach Anspruch 10, **dadurch gekennzeichnet** , daß zumindest ein Zwischen-Teleskopteil (4') zwischen dem Mantelteil (2') und dem unteren Teleskopteil (3') eingefügt ist.

19. Robotersystem nach Anspruch 10, **dadurch gekennzeichnet** , daß die genannten Verbindungseinrichtungen durch zumindest eine Leitung (7') gebildet ist, die mit dem unteren Teleskopteil (3') verbunden ist, und daß ein Leitungs-Aufwickelziehelement (11') in bezug auf das Mantelteil (2') befestigt ist.

20. Robotersystem nach Anspruch 19, **dadurch gekennzeichnet** , daß die Enden der Leitung mit einem Leitungs-Aufwickelziehelement (11') verbunden sind
und daß die Mitte der Leitung (7') über Rollen (14') mit dem unteren Teleskopteil (3') über eine Rolle (15') derart verbunden ist, daß die Leitung (7') eine Schleife bildet.

21. Robotersystem nach irgendeinem der vorhergehenden Ansprüche 10 bis 20, **dadurch gekennzeichnet**, daß das Krangerüst (9) einen weiteren Trägeraufbau (40) aufweist, der parallel zu dem Trägerbalken (12) in einer maximalen Entfernung (L) oberhalb des Trägerbalkens (12) verläuft und der Bewegungsbahnen (Y-Richtung) aufweist zum Tragen von weiteren Anlageteilen an dem Roboterarm (15).

22. Verwendung eines Robotersystems nach irgendeinem der vorhergehenden Ansprüche für die Ausführung von Arbeitsoperationen in der Schiffswerftindustrie.

## Revendications

1. Système robotisé (1) pour réaliser de manière automatique des opérations d'exploitation dans des structures ouvertes (17) dans les industries lourdes, comprenant une structure de portique (2) ayant au moins deux poutrelles longitudinales parallèles (3) munies de chemins de déplacement (4) dans la direction X pour supporter des pièces de mise en prise (10) à chaque extrémité d'au moins un portique robotisé transversal (9), qui comprend une poutrelle de support (12) ayant des chemins de déplacement (13) dans la direction Y pour supporter les pièces de mise en prise (14) sur un bras de robot (15), ledit bras de robot (15) ayant une extrémité supérieure qui peut être avancée à une hauteur maximale (L) au-dessus de la poutrelle de support (12), et une pièce inférieure qui peut être mobile dans une direction vers le haut et vers le bas dans une direction Z et qui présente une tête d'exploitation inférieure (16) pour réaliser lesdites opérations, caractérisé en ce que la poutrelle de support (12) du portique (9) est prévue à une certaine distance au-dessous du côté supérieur des poutrelles longitudinales (3), ladite distance correspondant au moins à la hauteur maximale (L) du bras de robot au-dessus de la poutrelle de support (12).

2. Système robotisé selon la revendication 1, caractérisé en ce que la poutrelle de support (12) du portique (9) est prévue à une certaine distance au-dessous de la face inférieure des poutrelles longitudinales (3), ladite distance correspondant au moins à la hauteur maximale (L) du bras de robot au-dessus de la poutrelle de support (12), et en ce que les chemins de déplacement (13) des pièces de mise en prise du bras de robot s'étendent vers l'extérieur au-dessous d'au moins une poutrelle longitudinale (3), de telle sorte que le bras de robot (15) peut être déplacé dans la zone au-dessous de la poutrelle longitudinale (3) avec son extrémité supérieure avancée à la hauteur (L) au-dessus de la poutrelle de support.

3. Système robotisé selon la revendication 1 ou 2, caractérisé en ce que les poutrelles longitudinales (3) de la structure de portique (2) comprennent des chemins de déplacement supérieurs et inférieurs (4, 5), lesdits chemins de déplacement inférieurs (5) s'étendant parallèlement à une certaine distance au-dessous des chemins supérieurs (4) et supportant les pièces de mise en prise inférieures (11) à chaque extrémité du portique robotisé transversal (9).

4. Système robotisé selon la revendication 3, caractérisé en ce que les chemins de déplacement inférieurs (5) des poutrelles longitudinales (3) sont placés à une certaine distance au-dessous des chemins de déplacement (4) comprise entre 1/25 et la moitié de la hauteur de passage au-dessous des poutrelles longitudinales (3).

5. Système robotisé selon l'une quelconque des revendications précédentes, caractérisé en ce que la poutrelle de support (12) du portique robotisé (9) est prévue à une certaine distance au-dessous des chemins de déplacement inférieurs (5) des poutrelles longitudinales (3) comprise entre ¼ et la moitié de la hauteur de passage au-dessous des poutrelles longitudinales (3).

6. Système robotisé selon l'une quelconque des revendications 3 à 5 précédentes, caractérisé en ce que les chemins de déplacement (5) des poutrelles longitudinales (3) et les pièces de mise en prise associées (11) comprennent des guides de bâti et des roues dentées menées associées.

7. Système robotisé selon l'une quelconque des revendications précédentes, caractérisé en ce que le bras de robot (15) est fixé de manière latéralement décalée dans la direction Y, vu par rapport au support des pièces de mise en prise (14) du bras de robot sur les chemins de déplacement (13) des poutrelles de support (12).

8. Système robotisé selon l'une quelconque des revendications précédentes, caractérisé en ce qu'au moins une poutrelle longitudinale comprend plusieurs chemins de déplacement.

9. Système robotisé selon l'une quelconque des revendications précédentes, caractérisé en ce que la structure de portique (2) comprend trois poutrelles (3) longitudinales ou plus parallèles ayant des chemins de déplacement pour supporter deux groupes ou plus de portiques robotisés (9) fonctionnant en parallèle.

10. Système robotisé selon l'une quelconque des revendications précédentes, comprenant un bras de robot sensiblement vertical (15) ayant des lignes d'alimentation (13') s'étendant jusqu'à la tête d'exploitation, caractérisé en ce que le bras de robot comprend une pièce formant enveloppe supérieure (2') sur laquelle sont montées les pièces de mise en prise (14), et qui est raccordée, par l'intermédiaire de moyens de raccordement (7') et facultativement de pièces télescopiques intermédiaires, avec une pièce télescopique inférieure (3') adaptée pour s'ajuster dans la pièce formant enveloppe (2') dans une position supérieure et être fixée dans des positions inférieures dans des positions inférieures par l'intermédiaire des moyens de raccordement (7') en prolongement de la pièce formant enveloppe (2') à des hauteurs facultatives.

11. Système robotisé selon la revendication 10, caractérisé en ce que la pièce formant enveloppe (2') et les pièces télescopiques intermédiaires de manière facultative et la pièce télescopique inférieure (3') sont fabriquées en matériau en forme de plaque.

12. Système robotisé selon la revendication 10 ou 11, caractérisé en ce que des guides coulissants sont prévus entre les pièces mobiles les unes par rapport aux autres du bras avec pour objectif une rétention et une commande mutuelle des pièces.

13. Système robotisé selon la revendication 10, caractérisé en ce que les lignes d'alimentation sont tirées par l'intermédiaire d'une ouverture d'entrée dans la partie formant enveloppe (2') et davantage en hauteur par l'intermédiaire d'un espace entre la paroi latérale de la pièce formant enveloppe (2') et la paroi latérale adjacente la plus à l'opposé d'une pièce télescopique et davantage vers le bas en direction de la tête d'exploitation.

14. Système robotisé selon la revendication 13, caractérisé en ce que ledit espace est en forme de creux (12').

15. Système robotisé selon la revendication 13 ou 14, caractérisé en ce que les lignes d'alimentation (13') sont tirées vers le bas à l'intérieur des pièces télescopiques (3', 4').

16. Système robotisé selon les revendications 13 à 15, caractérisé en ce que l'ouverture d'entrée (8') est ménagée dans la paroi latérale de la pièce formant enveloppe (2').

17. Système robotisé selon les revendications 13 à 16, caractérisé en ce que les lignes d'alimentation (13') sont fixées à la paroi latérale de la pièce formant enveloppe (2') au niveau de l'ouverture d'entrée (8').

18. Système robotisé selon la revendication 10, caractérisé en ce qu'au moins une pièce télescopique intermédiaire (4') est intercalée entre la pièce formant enveloppe (2') et la pièce télescopique inférieure (3').

19. Système robotisé selon la revendication 10, caractérisé en ce que lesdits moyens de raccordement sont formés par au moins une ligne (7') qui est reliée à la pièce télescopique inférieure (3'), et un élément tirefil formant bobinoir (11') fixé par rapport à la pièce formant enveloppe (2').

20. Système robotisé selon la revendication 19, caractérisé en ce que les extrémités de la ligne sont raccordées à un élément tire-fil formant bobinoir (11'), et en ce que le centre de la ligne (7') est raccordé par l'intermédiaire de galets (14') à la pièce télescopique inférieure (3') par l'intermédiaire d'un galet (15'), de telle sorte que la ligne (7') forme une boucle.

21. Système robotisé selon l'une quelconque des revendications 10 à 20 précédentes, caractérisé en ce que le portique (9) comprend une autre structure formant poutre (40), qui s'étend parallèlement à la poutrelle de support (12) à une distance maximale (L) au-dessus de la poutrelle de support (12), et qui présente des chemins de déplacement (direction Y) pour supporter d'autres pièces de mise en prise sur le bras de robot (15).

22. Utilisation d'un système robotisé selon l'une quelconque des revendications précédentes destiné à réaliser des opérations d'exploitation dans l'industrie des chantiers navals.
